# EUROPÄISCHE PATENTSCHRIFT

(11) **EP 0 880 930 B1**
(45) Veröffentlichungstag und Bekanntmachung des Hinweises auf die Patenterteilung: **15.11.2000**
(21) Anmeldenummer: 98109024.4
(22) Anmeldetag: 18.05.1998
(51) Int. Cl.: A47J 43/08

(54) **Elektrische Küchenmaschine mit Riemenantrieb**
Electric kitchen appliance with belt drive
Machine domestique électrique avec transmission à courroies

(30) Priorität: 26.05.1997 DE 19721974
(43) Veröffentlichungstag der Anmeldung: 02.12.1998
(73) Patentinhaber: BSH Bosch und Siemens Hausgeräte GmbH, 81669 München (DE)
(72) Erfinder: Zibret, Igor, 3327 Smartno ob P. (SI); Prezovnik, Peter, Dipl.-Ing., 3330 Mozirje (SI); Oblak, Aleksander, Dipl.-Ing., 3332 Recice/Savinji (SI); Augustin, Helmut, Dipl.-Ing., 83339 Chieming (DE)

(56) Entgegenhaltungen:
- EP-A- 0 570 685
- DE-A- 3 433 004
- DE-C- 4 310 847
- US-A- 3 528 469
- US-A- 4 285 473

## Beschreibung

Die vorliegende Erfindung betrifft eine elektrische Küchenmaschine mit einem Gehäuse, in dem ein Elektromotor mit einer Motorwelle angeordnet ist, der über einen Riemen eine Untersetzungs-Riemenscheibe einer vertikal im Gehäuse angeordneten ersten Welle antreibt, an die in einem auf dem Gehäuse der Küchenmaschine abstellbaren Arbeitsbehältnis laufende Arbeitswerkzeuge kuppelbar sind.

Eine derartige Küchenmaschine ist bekannt aus der EP 0 570 685 A1, wobei über deren vertikal angeordnete Motorwelle zwei in einer Achse gelagerte und sich mit unterschiedlichen Drehzahlen drehende Abtriebswellen angetrieben werden. Die beiden Abtriebswellen weisen entsprechende Riemenscheiben auf, die über je einen Riemen in Drehverbindung mit der Motorwelle stehen.

Aufgabe der vorliegenden Erfindung ist es, eine Küchenmaschine nach dem Oberbegriff des Patentanspruches 1 derart weiterzubilden, daß sie einen kompakten und flachen Aufbau aufweist.

Erfindungsgemäß ist dies bei einer gattungsgemäßen Küchenmaschine dadurch erreicht, daß der Elektromotor im Gehäuse liegend gehaltert ist, wodurch die Motorwelle im wesentlichen horizontal angeordnet ist, und daß eine Zwischenwelle im Gehäuse im wesentlichen vertikal gelagert ist, die einerseits mittels eines halb gekreuzten ersten Riemens an die Motorwelle und andererseits mittels eines offenen zweiten Riemens an die Welle zu deren Antrieb durch die Motorwelle gekuppelt ist. Durch die liegende Anordnung des Elektromotors kann auf ein sich oberhalb des Gerätesockels nach oben erstreckendes Motorgehäuse verzichtet werden. Infolge der Anordnung der vertikalen Zwischenwelle im Gehäuse muß der halbgekreuzte erste Riemen von der horizontal angeordneten Motorwelle nicht direkt auf die Untersetzungs-Riemenscheibe der ersten Welle laufen. Dadurch kann insgesamt ein sehr flacher und kompakter Aufbau der Küchenmaschine erreicht werden.

Um die Einsatzmöglichkeiten der Küchenmaschine zu steigern, ohne deren flachen und kompakten Aufbau zu beeinträchtigen, ist konzentrisch zur ersten Welle mindestens eine zweite Welle im Gehäuse angeordnet, die über einen offenen dritten Riemen ohne wesentliche Übersetzung an die Zwischenwelle gekuppelt ist. Aufgrund der Verwendung der Zwischenwelle mit dem zweiten und dem dritten Riemen kann sich die zweite Welle mit hoher Drehzahl, z.B. mit der der Motorwelle, drehen, ohne daß direkt davon, beispielsweise über eine Verzahnung, die Drehung der ersten Welle abgeleitet wird. Dies ist insbesondere dann bezüglich der Geräusch- und Wärmeentwicklung von Vorteil, wenn sich die zweite Abtriebswelle mit Drehzahlen von etwa 10.000 U/min dreht. Infolge der Entkopplung der zweiten Welle von der ersten Welle und der damit verbundenen geringen Wärmeentwicklung ist es möglich, die erste Welle und gegebenenfalls damit getriebetechnisch, beispielweise unter Verwendung eines Planetengetriebes, verbundene weitere Abtriebe aus Kunststoff auszubilden bzw. das Planetengetriebe im wesentlichen vollständig aus Kunststoff zu realisieren.

Gemäß einer bevorzugten Ausführungsform läuft der halbgekreuzte erste Riemen von der Motorwelle schräg nach oben zur Zwischenwelle. Die aufgrund der Laufrichtung des halbgekreuzten ersten Riemens vorgegebene Lage leicht geneigt zur Horizontalen, von der Motorwelle schräg nach oben, kann genutzt werden, um einen besonders flachen Aufbau zu erhalten. Denn unterhalb des Laufbereiches des ersten Riemens ist auf der Zwischenwelle ausreichend Platz, um dort weitere erforderliche Riemen auf der Zwischenwelle laufen zu lassen. Diese Riemen können dann offen in einer horizontalen Ebene im Bodenbereich der Küchenmaschine laufen und dementsprechend die Riemenscheiben als am weitest unten gelegene Komponeten der Abtriebe bzw. eine Eingangsstufe eines gegebenfalls vorhandenen Getriebes im Bodenbereich angeordnet sein.

Um das Spannen des ersten Riemens zu vereinfachen, ist der Abstand der Zwischenwelle von der Motorwelle bei unverändertem Abstand der Zwischenwelle zur ersten Welle veränderbar. Die Spannung der weiteren Riemen wird also durch das Spannen des ersten Riemens nicht beeinflußt.

Nachfolgend ist anhand schematischer Darstellungen ein Ausführungsbeispiel der erfindungsgemäßen Antriebseinheit beschrieben.

Es zeigen
- Fig. 1: in einer perspektivischen Ansicht eine Küchenmaschine mit einer darauf abgestellten Arbeitsschüssel.
- Fig. 2: stark vereinfacht in einer perspektivischen Darstellung das Motorlagerteil und das Getriebelagerteil der Küchenmaschine.
- Fig. 3: eine schematisierte Schnittdarstellung im wesentlichen entlang der Linie III-III in Fig. 2 im Bereich der Anlageflächen des Motor- und des Getriebelagerteils.
- Fig. 4a und b: einen Riemenspanner der Antriebseinheit in zwei unterschiedlichen Ansichten in vergrößertem Maßstab.
- Fig. 5: stark vereinfacht ausschnittweise den Motorlagerteil und den Getriebelagerteil gemäß Fig. 2 in einer Draufsicht.
- Fig. 6: in einer Seitenansicht in vergrößertem Maßstab eine im Getriebelagerteil gehalterte Zwischenwelle und
- Fig. 7: abschnittsweise den Getriebelagerteil und eine darin eingesetzte Getriebeeinheit im wesentlichen entlang der Linie VII-VII in Fig. 2.

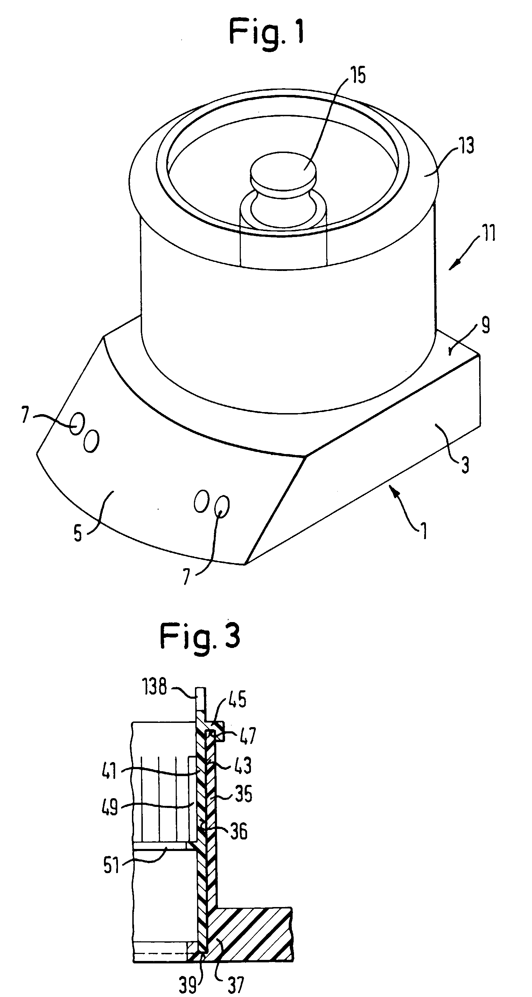

Eine flache Küchenmaschine 1 mit einem nicht gezeigtem Boden und einer darauf gesetzten Haube 3 weist eine schräg nach vorne abfallende Bedienblende 5 auf (Fig. 1). In dieser sind Anzeige- und Bedienelemente 7 der Küchenmaschine angeordnet. Auf einer im wesentlichen ebenen Arbeitsfläche 9 der Küchenmaschine 1 ist eine Arbeitsschüssel 11 befestigt, wie nachfolgend erläutert wird. Die Arbeitsschüssel 11 ist mit einem transparenten Deckel 13 verschlossen. In der Arbeitsschüssel 11 wird ein Knethaken 15 oder in weiteren nicht gezeigten Arbeitsbehältnissen werden weitere Arbeitswerkzeuge durch einen in der Küchenmaschine 1 angeordneten Abtrieb angetrieben, wie nachfolgend erläutert ist.

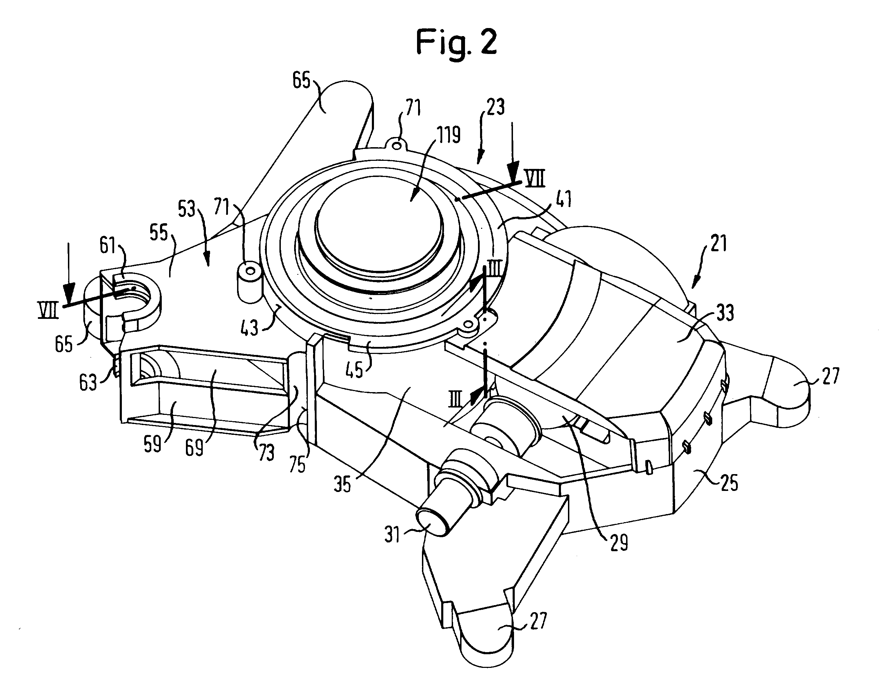

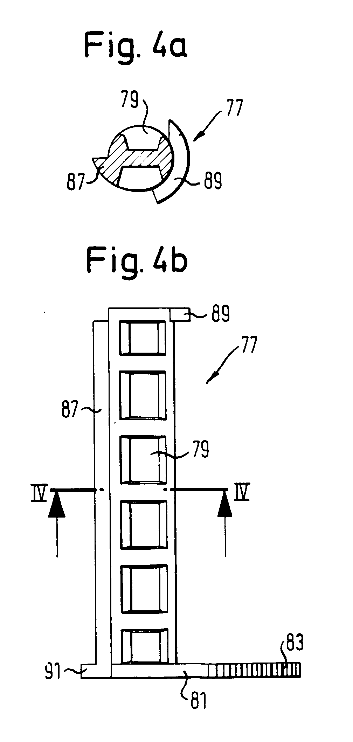

Zwischen der Haube 3 und dem Boden der Küchenmaschine 1 sind ein Motorlagerteil 21 und ein Getriebelagerteil 23 aus Kunststoff angeordnet (Fig. 2). Der Motorlagerteil 21 weist in seinem Bodenbereich eine Grundplatte 25 auf, deren mechanische Stabilität insbesondere durch an deren Unterseite ausgebildete Versteifungsrippen erhöht ist. Von der Grundplatte 25 weg erstrecken sich zwei erste Küchenmaschinenbeine 27, an deren Unterseite in an sich bekannter Weise jeweils Abstellfüße der Küchenmaschine 1 befestigt sind (nicht gezeigt), die durch Öffnungen des Bodens ragen. An dem Motorlagerteil 21 ist in einem entsprechend ausgebildeten Aufnahmebereich ein Elektromotor 29 im wesentlichen horizontal eingelegt, wodurch dessen Motorwelle 31 sich im wesentlichen horizontal von dem Motorlagerteil 21 weg erstreckt. Der Elektromotor 29 ist zusätzlich durch eine an dem Motorlagerteil 21 bzw. dessen Grundplatte 25 befestigte Haube 33 gehaltert. Zur Vereinfachung der Darstellung in Fig. 2 sind die Elektronik des Elektromotors 29 und weitere an sich bekannte Komponenten der Küchenmaschine nicht dargestellt. Seitlich neben dem Elektromotor 29 ist der Motorlagerteil 21 als klauenförmige Lagerschale 35 mit einer kreiszylinderabschnittförmigen Innenwandung 36 ausgebildet, die als Anlagefläche dient und sich im wesentlichen über die gesamte Höhe des Getriebelagerteiles 21 erstreckt. Senkrecht dazu erstreckt sich die Innenwandung 36 über einen Kreisabschnitt von etwa 210° (Fig. 2, Fig. 3). Ein unterer Randabschnitt 37 der klauenförmigen Lagerschale 35 weist über den vollständigen Umfangsbereich von etwa 210° eine erste Nut 39 auf (Fig. 3).

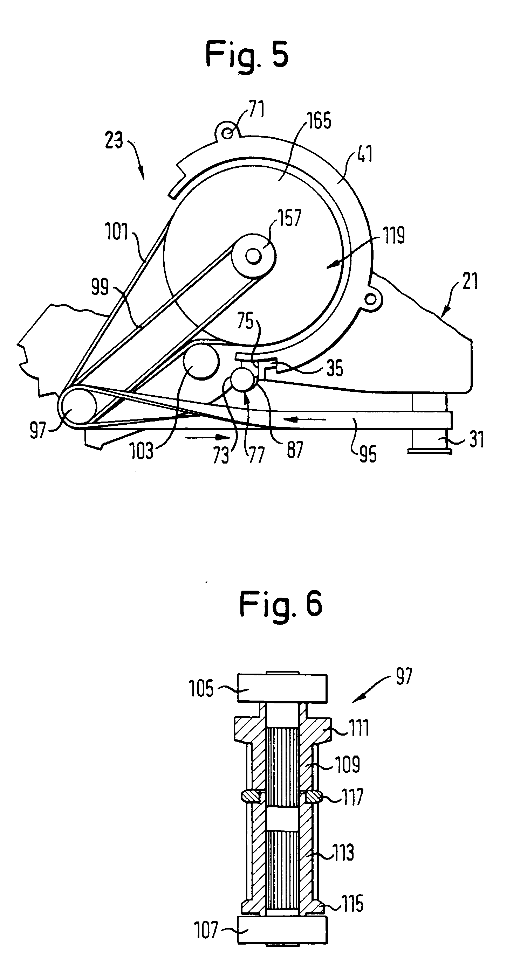

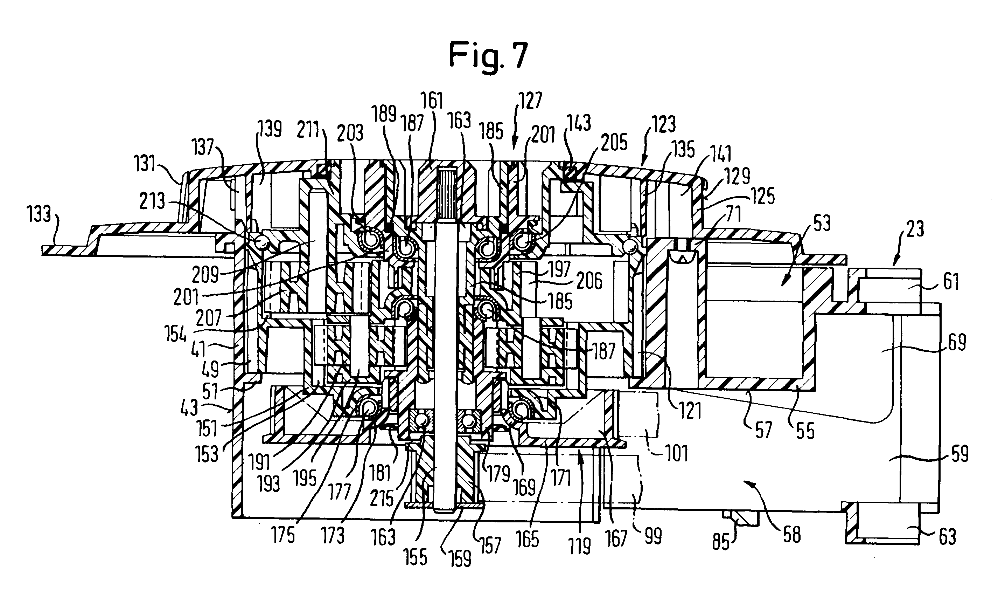

In die Lagerschale 35 ist von oben ein Getriebelagerzylinder 41 des Getriebelagerteils 23 gesteckt. Beim Ineinanderstecken parallel zur Mittelachse der kreiszylinderabschnittförmigen Innenwandung 36 gleitet eine entsprechend ausgebildete zylindermantelflächenförmige Außenwandung 43 des Getriebelagerzylinders 41 entlang der Innenwandung 36 der Lagerschale 35. Um eine möglichst spielfreie Montage sicherzustellen, sind an der Innenwandung 36 Längsrippen ausgebildet (nicht gezeigt). Die Endposition ist erreicht, wenn der untere Rand des Getriebelagerzylinderes 41 in der ersten Nut 39 der Lagerschale 35 steckt und der obere Rand der Lagerschale 35 in einer am oberen Randabschnitt 45 des Getriebelagerzylinders 41 entsprechend ausgebildeten zweiten Nut 47 steckt (Fig. 3). An der Innenumfangswandung des Getriebelagerzylinders 41 erstrecken sich in der oberen Hälfte des Zylinders 41 Lagerrippen 49, in denen eine nachfolgend beschriebene Getriebeeinheit 119 drehfest gehaltert ist (Fig. 7). Unterhalb der Lagerrippen 49 erstreckt sich umfangsseitig ein nach innen hervorspringender Absatz 51, der ebenfalls zur Halterung der Getriebeeinheit 119 dient. Die Getriebeeinheit 119 ist in Fig. 2 im Unterschied zur Fig. 7 lediglich stark schematisiert dargestellt und in Fig. 3 nicht dargestellt. Seitlich von dem Getriebelagerzylinder 41 erstreckt sich in horizontaler Richtung von diesem ein Getriebezylinderarm 53, der in seiner oberen Hälfte einen Hauptarm 55 mit einer Unterseite 57 aufweist. Unterhalb der Unterseite 57 des Hauptarmes 55 bzw. des ringförmigen Absatzes 51 ist der Getriebelagerzylinder 41 über einen Winkelbereich von etwa 120° offen und bildet dadurch eine Riemenöffnung 58 (Fig. 7) im Getriebelagerteil 23. Von dieser aus erstrecken sich seitlich unterhalb des Getriebezylinderarms 53 zwei Lagerarme 59 (Fig. 2, Fig. 7). In dem von der Getriebeeinheit 119 abgewandten Endabschnitt weisen der Hauptarm 55 und die beiden Lagerarme 59 eine obere Lagerschale 61 und eine untere Lagerschale 63 zur Lagerung einer nachfolgend erläuterten Zwischenwelle 97 (Fig. 6) auf. Weiterhin erstrecken sich seitlich von dem Getriebelagerzylinder 41 bzw. dem Lagerarm 59 entsprechend den ersten Küchenmaschinenbeinen 27, zweite Küchenmaschinenbeine 65. Zwischen dem Hauptarm 55 und dem dem Elektromotor 29 zugewandten Lagerarm 59 ist ein Riemenfenster 69 (Fig. 2, Fig. 7) vorgesehen.

Zur Befestigung einer nachfolgend erläuterten Abdeckplatte 123 (Fig. 7) an dem Getriebelagerteil 23 bzw. dem Getriebelagerzylinder 41 sind an diesen Schraubaugen und -hülsen 71 ausgebildet. Über die Höhe des Getriebezylinderarmes 53 ist in diesem eine sich vertikal erstreckende, rinnenförmige Riemenspanner-Lagerschale 73 und gering davon beabstandet an dem Motorlagerteil 21 eine Riemenspanner-Wandung 75 ausgebildet (Fig. 2, Fig. 5). In den dadurch gebildeten Aufnahmebereich ist ein in den Figuren 4a und 4b detailliert gezeigter Riemenspanner 77 zwischen den Motorlagerteil 21 und den Getriebelagerteil 23 geklemmt.

Dazu weist der Riemenspanner 77 einen im wesentlichen zylinderförmigen Hauptkörper 79 auf, an dessem unteren Endabschnitt sich ein senkrecht von der Achse des Hauptkörpers 79 abstehender, sichelförmiger Betätigungsarm 81 erstreckt (Fig. 4a, 4b). An der schmalen Außenwandung des Betätigungsarmes 81 ist eine Verzahnung 83 ausgebildet, die zum Spannen des Riemens, wie nachfolgend beschrieben ist, mit einem an der Unterseite des Getriebelagerteils 23 ausgebildeten Rastzahn 85 (Fig. 7) zusammenwirkt. Über im wesentlichen die gesamte Höhe des Riemenspanners 77 erstreckt sich ein Klemmnocken 87. Ein oberer Vorsprung 89 und ein unterer Vorsprung 91 übergreifen jeweils den unteren Randabschnitt 37 der Lagerschale 35 des Motorlagerteils 21 und die Oberseite des Hauptarms 55 des Getriebelagerteils 23 und begrenzen dadurch den vertikalen Abstand beider. Zusätzlich ist dadurch der Riemenspanner 77 an dem Getriebelagerteil 23 bzw. dem Motorlagerteil 21 in dem entsprechenden Aufnahmebereich gehaltert.

In Fig. 5 ist ausschnittsweise und stark vereinfacht gezeigt, wie ein halbgekreuzter Zwischenwellenriemen 95 zwischen einer in der oberen und unteren Lagerschale 61, 63 des Getrieberingarmes 53 gehalterten Zwischenwelle 97 (Fig. 6) gespannt ist. In Fig. 5 ist durch zwei Pfeile die Laufrichtung des Zwischenwellenriemens 95 gezeigt. Auf der Zwischenwellel 97 laufen zudem ein Mixerriemen 99 und ein Zusatzriemen 101, die mit entsprechenden Zahnriemenrädern 157, 165 der Getriebeeinheit 119 verbunden sind (Fig. 5, Fig. 7). Dabei ist der Zusatzriemen 101 zusätzlich durch eine in dem Getriebelagerteil 23 gehalterte Spannrolle 103 gespannt. Die Zwischenwelle 97 weist ein in der oberen Lagerschale 61 des Getriebelagerteils 23 gelagertes oberes Kugellager 105 und ein in der unteren Lagerschale 63 gelagertes unteres Kugellager 107 auf. Mit der eigentlichen Welle der Zwischenwelle 97 ist ein erstes Zwischenritzel 109 mit einem oberen ersten Bund 111 drehfest verbunden. Darunter ist an der eigentlichen Welle entsprechend ein zweites Zwischenritzel 113 mit einem unteren zweiten Bund 115 verbunden. Die beiden Ritzel und deren Laufbereiche sind durch eine auf die Welle gepreßte Bordscheibe 117 voneinander getrennt.

Der Zusammenbau des Motor- und des Getriebelagerteils 21, 23 bzw. das Spannen der Riemen 95, 99, 101 erfolgt vereinfacht wie folgt: Der Motorlagerteil 21 und der Getriebelagerteil 23 werden wie oben beschrieben ineinander gesteckt. Aufgrund der klauenförmigen Ausbildung der Lagerschale 35 und der Gestaltung des Getriebelagerzylinders 41 sind die beiden Lagerteile 21, 23 durch das Ineinanderstecken bereits relativ stabil miteinander verbunden (Fig. 2, 3, 5). Sie stützen sich über einen großen Flächenbereich aneinander ab und übergreifen sich gegenseitig. Die Lagerteile 21, 23 können jedoch noch relativ zueinander gedreht werden. Zwischen dem Ritzel der Motorwelle 31 und dem ersten Zwischenritzel 109 der Zwischenwelle 97 verläuft der Zwischenwellenriemen 95 halbgekreuzt. Infolge der Laufrichtung des Zwischenwellenriemens 95 läuft dieser von der Höhe der Motorwelle 31 geringfügig schräg nach oben durch das Riemenfenster 69 auf das erste Zwischenritzel 109. Unterhalb der Bordscheibe 117 läuft der Zusatzriemen 101 in der oberen Hälfte des zweiten Zwischenritzels 113 zu dem zweiten Zahnriemenrad 165 (Fig. 5, 7). Direkt darunter verläuft auf dem zweiten Zwischenritzel 113 nahe dem Boden des Getriebelagerteils 23 und damit des Bodens der Küchenmaschine 1 der Mixerriemen 99 zum ersten Zahnriemenrad 157 der Getriebeeinheit 119 (Fig. 5, 7). Zum Spannen des Zwischenwellenriemens 95 wird der Getriebelagerteil 23 in der Lagerschale 35 gemäß Fig. 5 im Uhrzeigersinn gedreht und damit der Abstand zwischen der Zwischenwelle 97 und der Motorwelle 31 vergrößert. Dies wird dadurch erreicht, daß der Riemenspanner 77 an dem Betätigungsarm 81 in dem durch die Riemenspanner-Lagerschale 73 und der Riemenspanner-Wandung 75 gebildeten Aufnahmebereich gemäß Fig. 5 im Uhrzeigersinn gedreht wird. Dadurch drückt der Klemmnocken 87 gegen die Riemenspanner-Wandung 75, wodurch der Abstand zwischen beiden und damit auch zwischen der Motorwelle 31 und der Zwischenwelle 97 vergrößert wird. Wenn der Zwischenwellenriemen 95 ausreichend gespannt ist, ist die relative Drehposition des Getriebelagerteils 23 zum Motorlagerteil 21 in dieser Stellung durch das Zusammenwirken der Verzahnung 83 des Riemenspanners 77 und des Rastzahns 85 des Getriebelagerteils 23 festgelegt. Zusätzlich kann durch Klebemitttel oder eine weitere Verschraubung die relative Stellung des Motorlagerteils 21 zu dem Getriebelagerteil 23 fixiert werden. Da sich die Zwischenwelle 97 beim Spannen des Zwischenwellenriemens 95 auf einem Kreis um die gemeinsame Mittelachse der Innenwandung 36 der Lagerschale 35 bzw. der Außenwandung 43 des Getriebelagerzylinders 41 dreht und in dieser Achse auch das erste und zweite Zahnriemenrad 157, 165 drehbar gehaltert sind, ändert sich der Abstand zwischen diesen und der Zwischenwelle 97 nicht. Das Spannen des Zusatzriemens 101 mit Hilfe der Spannrolle 103 kann deshalb unabhängig von dem Spannen des Zwischenwellenriemens 95 erfolgen. Die Länge des Mixerriemens 99 ist derart bemessen, daß dessen Spannen mit zusätzlichen Hilfsmitteln nicht erforderlich ist. Dabei verläuft der Zwischenwellenriemen 95 etwa in der Hälfte der Höhe der aneinanderliegenden Innenwandung 36 und Außenwandung 43 (Fig. 7).

In den Getriebelagerzylinder 41 ist von oben die komplett vormontierte Getriebeeinheit 119 eingesetzt (Fig. 7). Die Getriebeeinheit weist Außenrippen 121 auf, wie nachfolgend beschrieben ist, die mit den Lagerrippen 49 des Getriebelagerzylinderes 41 zusammenwirken und einen drehfesten Sitz der Getriebeeinheit 119 in dem Getriebelagerteil 23 sicherstellen. Zugleich liegen die Außenrippen 121 der Getriebeeinheit 119 an ihren unteren Endabschnitten jeweils auf dem Absatz 51 des Getriebelagerteils 23 auf, wodurch die Getriebeeinheit 119 axial nach unten abgestützt ist. Nach oben ist die Getriebeeinheit 119 durch eine runde Abdeckplatte 123 aus Kunststoff gesichert. Diese weist zwei kreisförmige Stufen auf und bildet durch die obere Stufe einen zylinderförmigen Plattenabsatz 125, der in seiner schalenförmigen Deckwandung mittig eine kreisförmige Abtriebsöffnung 127 aufweist. An einer Seitenwandung 129 des Plattenabsatzes 125 stützt sich umfangsseitig eine entsprechend ausgebildete, nicht gezeigte Schürze der Arbeitsschüssel 11 ab. Die Arbeitsschüssel 11 ist weiterhin mit nicht gezeigten, an sich bekannten Befestigungsmitteln ausgebildet, die mit den an der Seitenwandung 129 ausgebildeten Verriegelungselementen 131 bajonettartig zusammenwirken. Unterhalb der zweiten Stufe der Abdeckplatte 123 erstreckt sich ringförmig ein flacher Plattenrand 133, auf dem unter Zuhilfenahme einer ringförmigen Dichtung, die ebenfalls in diesem Bereich kreisförmig ausgeschnittene Haube 3 stufenlos und spaltfrei aufliegt. An der Unterseite der Abdeckplatte 123 erstreckt sich von der Deckwandung des Plattenabsatzes 125 eine ringförmige Plattenschürze 135. An deren Außenseite sind umfangseitig zahlreiche Plattennuten 137 ausgebildet, in die entsprechend am oberen Randabschnitt 45 des Getriebelagerzylinderes 41 ausgebildete Federn 138 steckbar sind (Fig. 3). Dadurch ist die Abdeckplatte 123 drehfest mit dem Getriebelagerteil 23 verbunden und kann durch die Arbeitsschüssel 11 in die Abdeckplatte 123 eingeleitete Kräfte in das Getriebelagerteil 23 weiterleiten. An der Innenumfangswandung der Plattenschürze 135 sind umfangsseitig sich von der Unterseite der Deckwandung des Plattenabsatzes 125 nach unten erstreckende Getriebeanschläge 139 zu dessen axialer Sicherung vorgesehen. Zusätzlich sind an der Unterseite der Abdeckplatte 123 drei Plattenschraubhülsen 141 angeformt, durch die zusammen mit den Schraubaugen bzw. -hülsen 71 die Abdeckplatte 123 zusätzlich an dem Getriebelagerteil 23 befestigbar ist. Zwischen dem Randbereich der Abtriebsöffnung 127 und der Getriebeeinheit 119 ist eine ringförmige Abdeckplattendichtung 143 eingelegt.

Die Getriebeeinheit 119 weist ein äußeres Hohlrad 151 auf, das in seinem oberen Bereich umfangsseitig die Außenrippen 121 zur drehfesten Lagerung der Getriebeeinheit 119 in den Lagerrippen 49 des Getriebelagerzylinders 41 besitzt. Dabei stützt sich das Hohlrad 151 mit den Außenrippen 121 auch auf dem Absatz 51 des Getriebelagerzylinderes 41 ab. Zudem weist das Hohlrad 151 eine erste und eine zweite Innenverzahnung 153, 154 auf, an der, wie nachfolgend erläutert ist, Zahnräder eines Planetengetriebes abrollen. In der Mitte der Getriebeeinheit 119 ist eine Abtriebswelle 155 drehbar gelagert. Im unteren Endabschnitt der Abtriebswelle 155 ist an diesem drehfest das erste Zahnriemenrad 157 (Fig. 5, 7) mit einer aufgepreßten Anlaufscheibe 159 befestigt. An dem entgegengesetzten Endabschnitt ist auf die Abtriebswelle 155 eine erste Kupplungsbuchse 161 gepreßt, die sich etwa bis in die Höhe der Deckwandung des Plattenabsatzes 125 der Abdeckplatte 123 erstreckt. An die erste Kupplungsbuchse 161 ist ein entsprechend ausgebildetes, in einem geeigneten Arbeitsbehältnis umlaufendes Arbeitswerkzeug ankuppelbar und durch die Abtriebswelle 155 antreibbar. Die Abtriebswelle 155 ist mittels zweier Rillenkugellager 163 in der Getriebeeinheit 119 drehbar gelagert, wie nachfolgend erläutert ist. Dabei ist das obere Kugellager 163 mit einer Dichtscheibe versehen.

Konzentrisch zum ersten Zahnriemenrad 157 ist in der Getriebeeinheit 119 ein zweites Zahnriemenrad 165 drehbar gelagert. Dies weist zur Belüftung der Getriebeeinheit 119 umfangsmäßig verteilte, sich nach oben erstreckende Kühlrippen 167 auf. Das zweite Zahriemenrad 165 stützt sich über eine innere Lagerschale 169 und eine äußere Lagerschale 171 des Hohlrades 151 durch ein dazwischen angeordnetes, offenes Schrägkugellager an dem Hohlrad 151 ab. Das Schrägkugellager weist in an sich bekannter Weise einen inneren Lagerring 173, einen äußeren Lagerring 175 und dazwischen einen Kugelhalter 177 mit den entsprechenden Lagerkugeln auf. Auf das zweite Zahnriemenrad 165 ist ein hülsenförmiges Sonnenrad 179 drehfest gesteckt und axial dazu durch einen in einer Nut des Sonnenrades 179 gepreßten Zackenring 181 gesichert. An ihrem oberen Endabschnitt ist das Sonnenrad 179 an seiner inneren Umfangsseite mit einer zweiten, sich nach oben bis neben die erste Kupplungsbuchse 161 erstreckenden, Kupplungsbuchse 185 mit Innenverzahnung verbunden. Das Sonnenrad 179 und die zweite Kupplungsbuchse 185 stützen sich über zwei weitere offene Schrägkugellager 187 in der Getriebeeinheit 119 nach außen ab. Zum Schutz der Getriebeeinheit 119 bzw. der Lagerelemente ist um die zweite Kupplungsbuchse 185 ein Dichtring 189 gelegt. Auf der unteren, ersten Innenverzahnung 153 des Hohlrades 151 laufen vier erste Planetenzahnräder 191, die von dem Sonnenrad 179 angetrieben werden. Die Planetenzahnräder 191 drehen sich jeweils um erste Nadelrollen 195, die in einen ringförmigen unteren Bereich eines ersten Planetenträgers 197 und in einem damit fest verbundenen Verstärkerring 193 drehfest eingepreßt sind. Der erste Planetenträger 197 ist mit einer hülsenförmigen dritten Kupplungsbuchse 201 fest verbunden, deren Verzahnung radial nach außen ragt. Zum Abdichten der Getriebeeinheit 119 ist auch auf die dritte Kupplungsbuchse 201 ein Dichtring 203 gesteckt. Die dritte Kupplungsbuchse 201 stützt sich über ein offenes Schrägkugellager 205 an einer vierten Kupplungsbuchse 211 und letztlich an dem Hohlrad 151 der Getriebeeinheit 119 ab, wie nachfolgend erläutert.

Der erste Planetenträger 197 weist umfangsseitig eine Außenverzahnung 206 auf, auf der drei zweite Planetenzahnräder 207 abrollen. Diese drehen sich jeweils, von dem als Sonnenrad dienenden ersten Planetenträger 197 angetrieben, um zweite Nadelrollen 209, die von unten in einen zweiten Planetenträger 211 gesteckt sind. Dessen oberer Endabschnitt ist als vierte Kupplungsbuchse 211 ausgebildet. Der zweite Planetenträger 211 stützt sich über Kugeln 213 am oberen Endabschnitt des Hohlrades 151 ab.

Die Getriebeeinheit 119 besteht aus der metallischen Abtriebswelle 155, die ohne direkten Verzahnungseingriff in einem spielfrei montierten, zweistufigen Planetengetriebe aus Kunststoff gelagert ist (Fig. 7). Zwischen dem Kunststoffgetriebe und der Abtriebswelle 155 ist ein axiales Spiel 215 vorgesehen, um die unterschiedlichen Längenausdehnungskoeffizienten von Metall und Kunststoff in der Getriebeinheit 119 ausgleichen zu können. Die Abtriebswelle 155 dreht sich ohne Übersetzung im wesentlichen mit der Drehzahl der Motorwelle 31 wie auch die Zwischenwelle 97. Bei einer Motordrehzahl unter Last beträgt die Drehzahl der Abtriebswelle 155 dann etwa 8000 bis 12000 Umdrehungen pro Minute. Das Übersetzungsverhältnis des zweiten Abtriebes bzw. der zweiten Kupplungsbuchse 185 beträgt etwa 5:1. Die weiteren Übersetzungsverhältnisse betragen jeweils im Verhältnis zur jeweiligen Eingangsstufe für die dritte Kupplungsbuchse 201 etwa 3,8:1 und für die vierte Kupplungsbuchse 211 etwa 3,1:1. Damit ergeben sich für die vier Abtriebe Drehzahlen von etwa 12.000, 2.400, 630 und 200 Umdrehungen pro Minute. Zusätzlich ist auch die Motordrehzahl abgestuft einstellbar. Dadurch sind im Bereich der vier Abtriebe bzw. Kupplungsbuchsen alle üblichen Arbeitsbehältnisse an einer Stelle auf der Küchenmaschine abstellbar und alle für den normalen Gebrauch der Küchenmaschine üblichen Arbeitsvorgänge ohne Zusatzgetriebe der Arbeitswerkzeuge durchführbar.

Das Planetengetriebe der Getriebeeinheit 119 ist zweistufig aufgebaut. Um die kostengünstigen offenen Schrägkugellager 187 und 205 verwenden zu können, ist die Getriebeeinheit 119 von oben durch die zweite Kupplungsbuchse 185 und von unten durch das Sonnenrad 179 eingefaßt, die beide spielfrei miteinander verbunden sind. Das weitere offene Schrägkugellager 173, 175, 177 ist dann mit Hilfe des Zackenrings 181 von unten in der Getriebeeinheit 119 spielfrei gehalten.

## Patentansprüche

1. Elektrische Küchenmaschine (1) mit einem Gehäuse, in dem ein Elektromotor (21) mit einer Motorwelle (31) angeordnet ist, der über einen Riemen (101) eine Untersetzungs-Riemenscheibe (165) einer vertikal im Gehäuse angeordneten ersten Welle (185) antreibt, an die in einem auf dem Gehäuse der Küchenmaschine (1) abstellbaren Arbeitsbehältnis (11) laufende Arbeitswerkzeuge kuppelbar sind, **dadurch gekennzeichnet,** daß der Elektromotor (29) im Gehäuse liegend gehaltert ist, wodurch die Motorwelle (31) im wesentlichen horizontal angeordnet ist, und daß eine Zwischenwelle (97) im Gehäuse im wesentlichen vertikal gelagert ist, die einerseits mittels eines halb gekreuzten ersten Riemens (95) an die Motorwelle (31) und andererseits mittels eines offenen zweiten Riemens (101) an die erste Welle (185) zu deren Antrieb durch die Motorwelle (31) gekuppelt ist.

2. Elektrische Küchenmaschine nach Anspruch 1, **dadurch gekennzeichnet**, daß konzentrisch zur ersten Welle (185) mindestens eine zweite Welle (155) im Gehäuse angeordnet ist, die über einen offenen dritten Riemen (99) ohne wesentliche Übersetzung an die Zwischenwelle (97) gekuppelt ist.

3. Elektrische Küchenmaschine nach Anspruch 2, **dadurch gekennzeichnet**, daß die zweite Welle (155) etwa mit der Motordrehzahl dreht, insbesondere mit etwa 10.000 Umdrehungen/Minute.

4. Elektrische Küchenmaschine nach einem der vorhergehenden Ansprüche, **dadurch gekennzeichnet**, daß die erste Welle (185) die Eingangsstufe eines Planetengetriebes mit mindestens einem zur ersten Welle konzentrischen dritten Abtrieb (201, 211) bildet.

5. Elektrische Küchenmaschine nach einem der vorhergehenden Ansprüche, **dadurch gekennzeichnet**, daß der halb gekreuzte erste Riemen (95) von der Motorwelle (31) schräg nach oben zur Zwischenwelle (97) läuft.

6. Elektrische Küchenmaschine nach einem der vorhergehenden Ansprüche, **dadurch gekennzeichnet**, daß der zweite und gegebenenfalls der dritte Riemen (99, 101) auf der Zwischenwelle (97) unterhalb des halb gekreuzten ersten Riemens (95) laufen.

7. Elektrische Küchenmaschine nach einem der vorhergehenden Ansprüche, **dadurch gekennzeichnet**, daß der Abstand der Zwischenwelle (97) von der Motorwelle (31) zum Spannen des ersten Riemens (95) bei unverändertem Abstand der Zwischenwelle (97) zur ersten Welle (185) veränderbar ist.

## Claims

1. Electric kitchen machine (1) with a housing, in which is arranged an electric motor (21) with a motor shaft (31), which by way of a belt (101) drives a speed reduction belt pulley (165) of a first shaft (185), which is arranged in the housing to be vertical and to which can be coupled processing tools running in a processing container (11) placeable on the housing of the kitchen machine (1), characterised in that the electric motor (29) is mounted in the housing to be horizontal, whereby the motor shaft (31) is arranged to be substantially horizontal, and that an intermediate shaft (97) is arranged in the housing to be substantially vertical, which intermediate shaft is coupled on the one hand by means of a half-twisted first belt (95) to the motor shaft (31) and on the other hand by means of an open second belt (101) to the first shaft (185) for the drive thereof by the motor shaft (31).

2. Electric kitchen machine according to claim 1, characterised in that at least one second shaft (155), which is coupled to the intermediate shaft (97) by way of an open third belt (99) without significant speed step-up, is arranged in the housing to be concentric with the first shaft (185).

3. Electric kitchen machine according to claim 2, characterised in that the second shaft (155) rotates at about the motor rotational speed, in particular at about 10,000 revolutions per minute.

4. Electric kitchen machine according to one of the preceding claims, characterised in that the first shaft (185) forms the input stage of a planetary gear with at least one third drive take-off (201, 211) concentric with the first shaft.

5. Electric kitchen machine according to one of the preceding claims, characterised in that the half-twisted first belt (95) runs from the motor shaft (31) obliquely upwards to the intermediate shaft (97).

6. Electric kitchen machine according to one of the preceding claims, characterised in that the second and optionally also the third belt (99, 101) run on the intermediate shaft (97) below the half-twisted first belt (95).

7. Electric kitchen machine according to one of the preceding claims, characterised in that the spacing of the intermediate shaft (97) from the motor shaft (31) is variable for tightening the first belt (95) with unchanged spacing of the intermediate shaft (97) relative to the first shaft (185).

## Revendications

1. Machine domestique électrique (1) comprenant un carter dans lequel est situé un moteur électrique (21) pourvu d'un arbre de moteur (31) qui entraîne, par le biais d'une courroie (101), une poulie de démultiplication (165) d'un premier arbre (185) situé verticalement dans le carter et auquel on peut coupler des outils de travail fonctionnant dans un récipient de travail (11) pouvant être placé sur le carter de la machine domestique (1), caractérisée en ce que le moteur électrique (29) est maintenu couché dans le carter, grâce à quoi l'arbre de moteur (31) est essentiellement horizontal, et en ce qu'un arbre intermédiaire (97) est monté de manière essentiellement verticale dans le carter, lequel arbre intermédiaire est couplé d'une part à l'arbre de moteur (31) au moyen d'une première courroie (95) demi-croisée, et d'autre part au premier arbre (185), au moyen d'une seconde courroie (101) ouverte, afin que celui-ci soit entraîné par l'arbre de moteur (31).

2. Machine domestique électrique selon la revendication 1, caractérisée en ce qu'au moins un second arbre (155) est situé dans le carter de manière concentrique par rapport au premier arbre (185), lequel second arbre (155) est couplé à l'arbre intermédiaire (97) sans multiplication essentielle par le biais d'une troisième courroie (99) ouverte.

3. Machine domestique électrique selon la revendication 2, caractérisée en ce que le second arbre (155) tourne à peu près à la vitesse du moteur, notamment à la vitesse d'environ 10.000 tours/minute.

4. Machine domestique électrique selon l'une quelconque des revendications précédentes, caractérisée en ce que le premier arbre (185) forme l'étage d'entrée d'un engrenage planétaire comprenant au moins un troisième arbre (201, 211) concentrique par rapport au premier arbre.

5. Machine domestique électrique selon l'une quelconque des revendications précédentes, caractérisée en ce que la première courroie (95) demi-croisée passe de l'arbre de moteur (31) à l'arbre intermédiaire (97) en s'inclinant vers le haut.

6. Machine domestique électrique selon l'une quelconque des revendications précédentes, caractérisée en ce que la seconde et, le cas échéant, la troisième courroie(s) (99, 101) passe(nt) sur l'arbre intermédiaire (97) sous la première courroie (95) demi-croisée.

7. Machine domestique électrique selon l'une quelconque des revendications précédentes, caractérisée en ce que la distance entre l'arbre intermédiaire (97) et l'arbre de moteur (31) peut être modifiée afin de mettre en tension la première courroie (95) sans que soit modifiée la distance entre l'arbre intermédiaire (97) et le premier arbre (185).
